# EUROPEAN PATENT SPECIFICATION

(11) **EP 3 544 237 B1**
(45) Date of publication and mention of the grant of the patent: **09.12.2020**
(21) Application number: 18754390.5
(22) Date of filing: 07.02.2018
(51) Int. Cl.: H04L 12/26, H04L 12/24, H04L 12/715, H04L 12/931

(54) **SDN-BASED REMOTE STREAM MIRRORING CONTROL METHOD, IMPLEMENTATION METHOD, AND RELATED DEVICE**
STEUERUNGSVERFAHREN DER SPIEGELUNG EINES SDN-BASIERTEN FERNSTROMS, IMPLEMENTIERUNGSVERFAHREN UND ZUGEHÖRIGE VORRICHTUNG
PROCÉDÉ DE COMMANDE DE DUPLICATION DE FLUX À DISTANCE BASÉ SDN, PROCÉDÉ DE MISE EN OEUVRE, ET DISPOSITIF ASSOCIÉ

(30) Priority: 14.02.2017 CN 201710077875
(43) Date of publication of application: 25.09.2019
(73) Proprietor: ZTE Corporation, Shenzhen, Guangdong 518057 (CN)
(72) Inventor: HU, Yongsheng, Shenzhen Guangdong 518057 (CN); HUANG, Xiang, Shenzhen Guangdong 518057 (CN)
(74) Representative: Lavoix
(86) International application number: PCT/CN2018/075531
(87) International publication number: WO 2018/149338

(56) References cited:
- EP-A1- 2 629 463
- EP-A1- 2 765 742
- CN-A- 104 219 149
- CN-A- 104 618 194
- CN-A- 104 901 890
- CN-A- 105 516 025
- CN-A- 106 100 999
- US-A1- 2015 263 943
- US-A1- 2016 234 091
- US-A1- 2016 285 742

## Description

### TECHNICAL FIELD

The present disclosure relates to the technical field of communication, and particularly to a method for software defined network (SDN)-based control and implementation over remote flow mirroring, related devices.

### BACKGROUND

Network traffic monitoring is a common application in network communication, which may be realized by a mirror technology.

In a present mirror technology for monitoring a network traffic flow, a user or a network manager is needed to set configurations for remote destination mirroring at a remote switch, and one session is needed to manage each mirror configuration, so that more resources are occupied. Moreover, when a switch performs port data mirroring or forwards a mirrored flow, an additional physical port is needed to be occupied for data conversion as a reflection port. If input and output traffic flows of a source port are both needed to be mirrored, it is further needed to disable a Media Access Control (MAC) learning function on mirror Virtual Local Area Network (VLAN) interfaces of a source switch, an intermediate switch and a destination switch, otherwise there may be brought such a phenomenon that a mirrored traffic flow may not be forwarded to a destination monitoring device. In brief, in related arts, configurations for remote flow mirroring are complex and a resource utilization rate is low.

EP2629463A1 discloses a switch system allows free change of a grain degree of monitoring without being conscious of a routing control. For example, a control protocol of a transmitter is used based on the open flow (OpenFlow) technique to control the monitoring function of the switch system, and the centralized control of the monitoring can be realized as the whole network and the monitoring result is reflected on the routing control. Here, the switch has a flow table for packet transfer and a flow table for monitoring. Both of the tables are searched to one packet and a multi-hit operation is performed to execute the operation of each of the entries. That is, both the tables are searched and the packet is transferred according to corresponding flow entries.

With rapid development of a network technology, an SDN technology also has been applied more and more extensively. User customization of a forwarding-plane device may be implemented by a centralized controller, and a programmable Application Programming Interface (API) is provided for a user to flexibly control a network behavior. However, for how to realize a remote flow mirroring function of monitoring the network traffic flow in an SDN, there is yet no effective solution in the related arts.

### SUMMARY

Embodiments of the disclosure provide a method for SDN-based control over remote flow mirroring, a method for SDN-based implementation over remote flow mirroring, related devices and storage medium.

According to an aspect, the embodiments of the disclosure provide a method for SDN-based control over remote flow mirroring according to claim 1.

According to another aspect, the embodiments of the present disclosure further provide a method for SDN-based implementation over remote flow mirroring according to claim 7.

According to another aspect, the embodiments of the present disclosure further provide a device for SDN-based control over remote flow mirroring according to claim 12.

According to another aspect, the embodiments of the present disclosure further provide a controller according to claim 14.

According to another aspect, the embodiments of the present disclosure further provide a switch according to claim 15.

Preferred embodiments of the invention are the subject matter of the dependent claims, whose content is to be understood as forming an integral part of the present description.

The method for SDN-based control and implementation over remote flow mirroring, the related devices and the storage medium, provided in the embodiments of the present disclosure are configured to realize a remote flow mirror function of monitoring a network traffic flow in an SDN. It is not needed for a user to set a command on a switch for remote flow mirroring, and the controller is adopted for unified management, such that any traffic flow in the SDN may be flexibly mirrored to any destination port in the SDN, thereby greatly simplifying configurations for remote flow mirroring, reducing complexity in network deployment, and increasing a network resource utilization rate effectively.

### BRIEF DESCRIPTION OF DRAWINGS

FIG. 1 is a flowchart of a method for SDN-based control over remote flow mirroring according to an embodiment of the present disclosure.
FIG. 2 is a flowchart of a method for SDN-based implementation over remote flow mirroring according to an embodiment of the present disclosure.
FIG. 3 is a network structural diagram of implementing remote flow mirroring in an SDN according to an embodiment of the present disclosure.
FIG. 4 is a detailed flowchart of a method for SDN-based control and implementation over remote flow mirroring according to an embodiment of the present disclosure.
FIG. 5 is a schematic diagram of a mirror flow table sent to switches by a controller according to an embodiment of the present disclosure.
FIG. 6 is a schematic structural diagram of a device for SDN-based control over remote flow mirroring according to an embodiment of the present disclosure.
FIG. 7 is a schematic structural diagram of a device for SDN-based implementation over remote flow mirroring according to an embodiment of the present disclosure.

### DETAILED DESCRIPTION

The disclosure will be described below in combination with the drawings in detail. It is to be understood that specific embodiments described herein are only adopted to explain the disclosure and not intended to limit the disclosure.

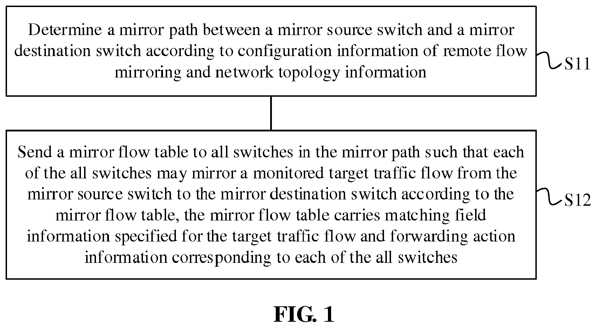

As shown in FIG. 1, an embodiment of the present disclosure provides a method for SDN-based control over remote flow mirroring, which is based on a controller, namely applied to the controller. The control method includes the following steps S11 to S12.

In step S11, a mirror path between a mirror source switch and a mirror destination switch is determined according to configuration information of remote flow mirroring and network topology information.

In step S12, a mirror flow table is sent to all switches in the mirror path such that each of the all switches mirrors a monitored target traffic flow from the mirror source switch to the mirror destination switch according to the mirror flow table, the mirror flow table carries matching field information specified for the target traffic flow and forwarding action information corresponding to each of the all switches.

According to the method for SDN-based control over remote flow mirroring provided in the embodiment of the present disclosure, a mirror path between a mirror source switch and a mirror destination switch may be determined according to configuration information of remote flow mirroring and network topology information, and a mirror flow table is sent to switches in the mirror path. Since the mirror flow table carries matching field information specified for a target traffic flow and forwarding action information corresponding to each of the switches, therefore each of the switches may mirror a monitored target traffic flow from the mirror source switch to the mirror destination switch according to the mirror flow table. In such a manner, it is not needed for a user to set a command on the switch for remote flow mirroring, the controller is adopted for unified management, and then any traffic flow in an SDN may be flexibly mirrored to any destination port in the SDN, thereby greatly simplifying configurations for remote flow mirroring, reducing complexity in network deployment, and increasing a network resource utilization rate effectively.

Specifically, a network manager or a user may set the configurations for remote flow mirroring for the controller, and the configuration information of remote flow mirroring inputted by the network manager or the user may include a mirror port or a mirror flow rule or a combination of the mirror port and the mirror flow rule. In an embodiment, the mirror port may include an input port or output port for the target traffic flow on a switch corresponding to the target traffic flow. The mirror flow rule may include at least one of: source/destination MAC, a source/destination IP, a source/destination TCP/UDP port, a tunnel label, user-defined metadata and the like.

In step S11, the controller, after receiving these configurations for remote flow mirroring, determines the mirror path between the mirror source switch and the mirror destination switch according to the configuration information of remote flow mirroring and the network topology information. In an embodiment, it is a basic characteristic of the SDN that the controller collects the network topology information. The network topology information may include device information and port information of the switches, link information between switch devices, position information of a host in the network and the like. In an embodiment, the mirror path between the switches may include information of the switches on the mirror path and port information of a link between the switches.

Specifically, in step S12, the mirror flow table is sent to switches in the mirror path, and the mirror flow table carries the matching field information specified for the target traffic flow and the forwarding action information corresponding to each of the switches. In an embodiment, the matching field information and the forwarding action information corresponding to each of the switches may be generated according to the configuration information of remote flow mirroring.

Since a mirror link includes the mirror source switch, an intermediate switch and the mirror destination switch, each of the switches plays a respective one of different roles in the mirror path, and also each of the switches corresponds to a respective one of the different mirror flow tables. In an embodiment, the operation that the mirror flow table is sent to each of the switches in the mirror path may include that: a local mirror flow table is sent to the mirror source switch in the mirror path, and a forwarding mirror flow table is sent to each of the intermediate switch and the mirror destination switch in the mirror path.

In an embodiment, the matching field information may also correspondingly change according to different sending objects of the mirror flow table. For example, in an embodiment of the present disclosure, the matching field information may include first matching field information for the mirror source switch and second matching field information for one or more intermediate switches and the mirror destination switch. Herein, the first matching field information may include mirror port information and/or mirror flow rule information. The second matching field information may include mirror encapsulation label information corresponding to the target traffic flow or a combination of the mirror encapsulation label information and the mirror flow rule.

In an embodiment, the mirror port may include an input port or output port for the target traffic flow on a switch corresponding to the target traffic flow. And the mirror flow rule may include at least one of: source/destination MAC, a source/destination IP, a source/destination TCP/UDP port, a tunnel label or user-defined metadata.

Based on the local mirror flow table, the mirror source switch may label a traffic message of a traffic flow matched with both of the mirror port and the mirror flow rule with a label of mirror encapsulation, and forward the traffic message to a next-hop output port in the mirror path at the same time of forwarding the traffic at a normal traffic forwarding output port.

Based on the forwarding mirror flow table, the intermediate switch and the mirror destination switch may forward a mirrored flow matched with both of the mirror rule and the label of mirror encapsulation on the mirror path.

Specifically, the label of mirror encapsulation belongs to an encapsulation type and label range of the mirrored flow determined by the network manager according to an SDN plan. Common label types of mirror encapsulation include Virtual Local Area Network (VLAN), Virtual Extensible Local Area Network (VXLAN), Generic Route Encapsulation (GRE), Multiple Protocol Label Switching (MPLS) and the like. The label range refers to a range of a label value reserved for the mirrored flow, such as, a range of a label value including VLAN-id and VXLAN vni. The label range is needed to avoid a conflict with a label range for a normal traffic. The label of mirror encapsulation may be used to identify a message as a message of a mirrored flow, namely distinguishing a mirrored message from a normal message.

In an embodiment, the same mirror label may be adopted for all mirrored flows, and a respective one of the different mirror labels may also be allocated for each of the mirrored flows, which are not limited in the embodiments of the present disclosure. For example, in an embodiment of the present disclosure, if there is always one fixed mirror destination switch in the network, the same label of mirror encapsulation may be adopted for all of the mirrored flows. If each of the different traffic flows is needed to be mirrored to a respective one of the different mirror destination switches, each of the mirrored traffic flows is needed to be allocated with a respective one of the different labels of mirror encapsulation. The same is true for traffic flow mirroring including a mirror flow rule definition. That is, if there are no conflicts between the mirror flow rules, each of the mirror flow rules may distinguish a unique mirrored flow, and the same label of mirror encapsulation may be allocated for all of the mirrored flows. It is apparent that sharing the label of mirror encapsulation by the mirrored flows may reduce a range needed to be reserved for the labels of mirror encapsulation, particularly for a condition that VLAN encapsulation is shared by both of a traffic and a mirrored traffic.

Furthermore, in a specific embodiment, the number of the flow tables sent to the mirror source switch, the intermediate switch and the mirror destination switch by the controller may be one or multiple, as long as the forwarding effect is realized. That is, the mirror flow table may be divided into multiple parts, and the parts are sent one by one to each of the switches in the mirror path.

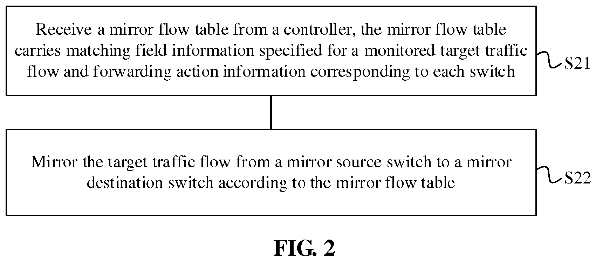

Correspondingly, as shown in FIG. 2, an embodiment of the present disclosure provides a method for SDN-based implementation over remote flow mirroring, which is applied to a switch and includes the following steps S21 to S22.

In step S21, a mirror flow table is received from a controller, the mirror flow table carries matching field information specified for a monitored target traffic flow and forwarding action information corresponding to each switch.

In step S22, the target traffic flow is mirrored from a mirror source switch to a mirror destination switch according to the mirror flow table.

According to the method for SDN-based implementation over remote flow mirroring provided in the embodiment of the disclosure, a switch may receive a mirror flow table from a controller and then mirror a target traffic flow from a mirror source switch to a mirror destination switch according to matching field information specified for the monitored target traffic flow and forwarding action information corresponding to each switch in the mirror flow table. In such a manner, it is not needed for a user to set a command on the switch for remote flow mirroring, the controller is adopted for unified management, and then any traffic flow in an SDN may be flexibly mirrored to any destination port in the SDN, thereby greatly simplifying configurations for remote flow mirroring, reducing complexity in network deployment, and increasing a network resource utilization rate effectively.

In an embodiment, the operation in S22 that the target traffic flow is mirrored from a mirror source switch to a mirror destination switch according to the mirror flow table may include the following operations.

The target traffic flow is identified from a message sequence according to the matching field information in the mirror flow table.

A corresponding forwarding operation is performed on the target traffic flow according to the forwarding action information in the mirror flow table.

In an embodiment, the mirror source switch performs the following steps.

The target traffic flow is screened from the message sequence according to the matching field information in the mirror flow table.

The target traffic flow is labeled with a label of mirror encapsulation to form a mirrored flow at the same time of traffic forwarding.

The mirrored flow is duplicated to a port connected with a next-hop switch in the mirror path for output.

In an embodiment, each intermediate switch in the mirror path corresponding to the target traffic flow may perform the following steps.

The mirrored flow forwarded by a previous-hop switch is received.

The mirrored flow is identified from the message sequence according to the matching field information in the mirror flow table and forwarded to the next-hop switch until the mirrored flow reaches the mirror destination switch.

The mirror destination switch may perform the following step.

The mirrored flow is outputted to a port connected with a monitoring device according to the mirror flow table.

In an embodiment, the matching field information may include first matching field information for the mirror source switch and second matching field information for one or more intermediate switch and the mirror destination switch. The first matching field information includes mirror port information and/or mirror flow rule information. The second matching field information includes mirror encapsulation label information corresponding to the target traffic flow or a combination of the mirror encapsulation label information and the mirror flow rule.

Specific implementation of the present disclosure will be described below in combination with the drawings in detail.

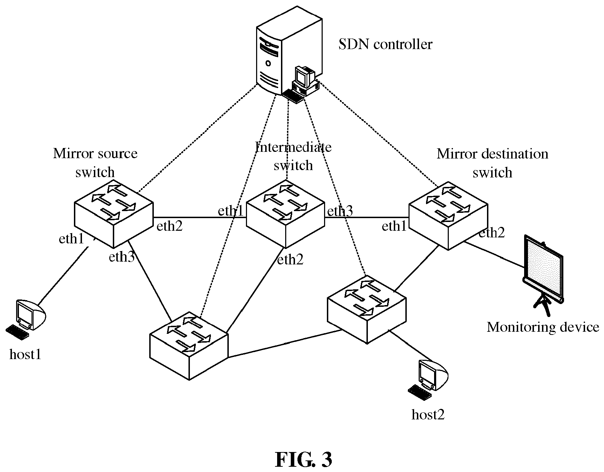

FIG. 3 is a network structural diagram of implementing remote flow mirroring in an SDN according to an embodiment of the disclosure. As shown in FIG. 3, an SDN includes at least one controller, multiple interconnected OpenFlow switches and multiple user hosts. For implementing remote flow mirroring, a mirror source switch, a mirror destination switch, an intermediate switch, at least one host acting as a monitoring object and a monitoring device may further be subdivided in the SDN. Each of the switches has a port 1 (eth1), a port 2 (eth2) and a port 3 (eth3).

A flow-based forwarding definition is supported in the SDN, and remote mirroring of a flow is also needed to be supported during implementation of remote mirroring.

In the embodiment of the present disclosure, the remote flow mirroring is further defined as follows. A specified traffic flow is mirrored to a port of another specified switch in the mirror source switch and received by the monitoring device. The specified traffic flow refers to all message sequences meeting a specified matching field. Herein, the matching field includes, but not limited to, an input port, an output port, a message header such as source/destination MAC, a source/destination IP, a source/destination TCP/UDP port and various tunnel labels, or user-defined metadata. For example, it is specified in an OpenFlow protocol that all analyzable and identifiable message fields may be used as the matching field. Since any message, matched with a specified field, in the message sequence, may be determined as a traffic flow, therefore messages at the input and output ports may be screened to acquire more precise mirrored flow output in the embodiment of the disclosure.

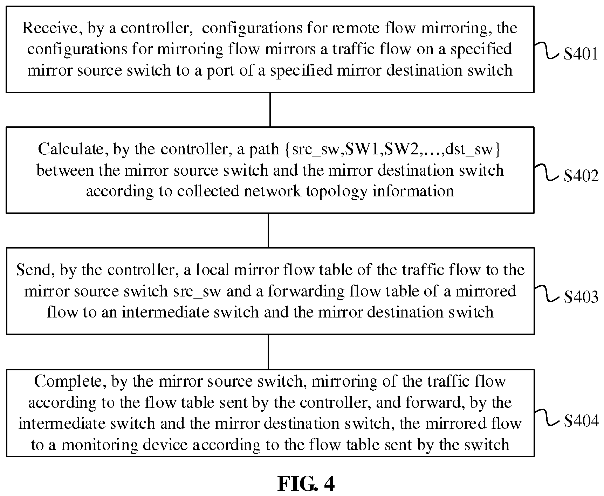

FIG. 4 is a flowchart of an SDN-architecture-based method for remote flow mirroring according to an embodiment of the disclosure. A controller, after receiving configurations for remote flow mirroring of a user, may calculate a path between a mirror source switch and a mirror destination switch according to collected network topology information, send a local mirror flow table of a traffic flow to the mirror source switch and send a forwarding flow table of a mirrored flow to an intermediate switch and the mirror destination switch. Specific steps are described as follows.

In S401, the controller receives the configurations for remote flow mirroring, the configurations for mirroring flow mirrors a traffic flow on a specified mirror source switch to a port of a specified mirror destination switch.

The traffic flow refers to all message sequences meeting a specified matching field. For convenient description, the matching field of the traffic flow is further divided into two parts, i.e., a mirror port and a mirror flow rule. Herein, the mirror port refers to an input port or output port of the traffic flow, and the mirror flow rule refers to a combination of other matching fields except the mirror port, such as, a message header including source/destination MAC, a source/destination IP, a source/destination TCP/UDP port and various tunnel labels, or user-defined metadata. In an SDN, one traffic flow definition may include both parts, i.e., a mirror port definition and a mirror flow rule definition, or one traffic flow definition may include only one of them.

For a port mirror function in related arts, a mirror port and a direction are usually specified only. For example, an input message, an output message or two-way message of the mirror port is specified.

In the SDN, a traffic flow simultaneously matched with the mirror port and the mirror flow rule is supported more extensively. For example, when an input message of a certain Virtual Machine (VM) is specified to be mirrored, an output port of a port where the VM is located may be specified as the mirror port, meanwhile, the mirror flow rule may be that the message is mirrored where MAC of a specified switch is destination MAC.

In step S402, the controller calculates a path {src_sw,SW1,SW2,...,dst_sw} between the mirror source switch and the mirror destination switch according to the collected network topology information.

Herein, it is a basic characteristic of the SDN that the controller collects the network topology information.

The network topology information includes device information and port information of the switches, link information between switch devices and position information of the host in the network.

The path between the switches includes information of the switches on the path and port information of a link between the switches.

In S403, the controller sends a local mirror flow table of the traffic flow to a mirror source switch src_sw, and the controller sends the forwarding flow table of a mirrored flow to the intermediate switch and the mirror destination switch.

Based on the local mirror flow table of the traffic flow of the mirror source switch, the traffic flow of the mirror source switch is duplicated to a local port connected with a next-hop switch on the mirror path.

Based on the local mirror flow table of the traffic flow of the mirror source switch, a traffic message of a traffic flow matched with both of the mirror port and the mirror flow rule is labeled with a label of mirror encapsulation and then forwarded to a next-hop output port in the mirror path at the same time of forwarding the traffic flow at a normal traffic forwarding output port.

The mirrored flow refers to a duplication of the traffic flow on the mirror source switch. And the message of the traffic flow is labeled with the label of mirror encapsulation for transmission between the mirror source switch and the mirror destination switch.

Based on the forwarding flow table of the mirrored flow of each of the intermediate switch and the mirror destination switch, the mirrored flow is forwarded to a specified port of the mirror destination switch.

Based on the forwarding flow table of the mirrored flow of the intermediate switch and the mirror destination switch, a mirrored flow matched with both of the mirror rule and the label of mirror encapsulation is forwarded on the mirror path.

In step S404, the mirror source switch completes mirroring of the traffic flow according to the flow table sent by the controller, and the intermediate switch and the mirror destination switch forward the mirrored flow to the monitoring device according to the flow table sent by the switch.

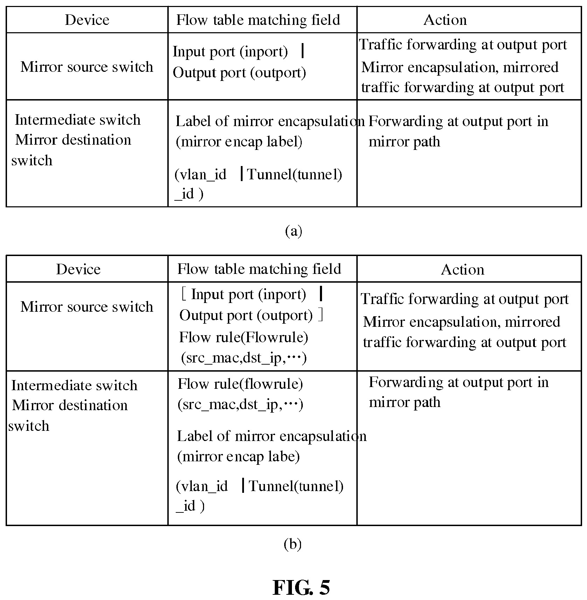

FIG. 5 is a schematic diagram of a forwarding flow table of a switch, sent to implement remote flow mirroring on the basis of an SDN architecture, according to an embodiment of the disclosure. During implementation of remote flow mirroring, a controller sends a local flow table of a traffic flow to a mirror source switch to instruct the mirror source switch to duplicate the traffic flow and further encapsulate the traffic flow into a mirrored flow. The controller sends a forwarding flow table of the mirrored flow to an intermediate switch and a mirror destination switch to instruct the intermediate switch and the mirror destination switch to forward the mirrored flow to a specified port of the mirror destination switch. In a specific embodiment, different processing manners are adopted according to different traffic flow definitions and different label types of mirror encapsulation.

FIG. 5(a) is a schematic diagram of a forwarding flow table sent to switches by a controller to implement conventional remote port mirroring according to the embodiment. During remote port mirroring, only a mirror port is defined as an input and/or output port, and there is no other mirror flow rule definition. The controller re-encapsulates a traffic flow with a label of mirror encapsulation, which is to be forwarded to the port of the mirror destination switch on the mirror source switch at the same time of normally forwarding the traffic flow. For example, in an embodiment of the present disclosure, a VLAN-encapsulation-based mirror flow table of remote port is as shown in Table 1. As shown in Table 1 (VLAN-encapsulation-based flow table of remote port mirroring), the controller receives a mirror instruction of an output port 1 on the source switch. The controller calculates a path between the mirror source switch and the destination switch according to a topology. A flow table is sent to the mirror source switch to match a flow table where the output port is 1 and an action is forwarding the traffic flow at the output port 1, and simultaneously encapsulating a layer of headers with a VLAN label 10 to a port 3 for mirror forwarding. The intermediate switch and the destination switch perform forwarding the traffic flow to the specified port of the mirror destination switch according to the VLAN label 10.

**Table 1**

| Device | Flow table matching field | Action |
|---|---|---|
| Mirror source switch | outport=1 | output port=1 (normal data is forwarded to port 1); |
| | | push vlan, set vlan-id=10, output port=3 (mirrored flow is forwarded to port 3) |
| Intermediate switch Mirror destination switch | vlan-id=10 | output port=2 (mirrored flow is forwarded to port 2) |

VXLAN, GRE, MPLS and other encapsulation may also be adopted for remote port mirroring. In such case, the flow table of the mirror source switch and the flow table of the intermediate switch and the mirror destination switch, which are all sent by the controller, are as shown in Table 2 (VXLAN-encapsulation-based flow table of remote port mirroring).

**Table 2**

| Device | Flow table matching field | Action |
|---|---|---|
| Mirror source switch | outport=1 | output port=1 (normal data is forwarded to port 1); |
| | | set tunnelid=100, output port=3 (mirrored flow is forwarded to port 3) |
| Intermediate switch Mirror destination switch | Tunnel_id=100 | output port=2 (mirrored flow is forwarded to port 2) |

FIG. 5(b) is a schematic diagram of a forwarding flow table sent to switches by a controller to implement common remote flow mirroring in an SDN according to the embodiment. In the SDN, a traffic flow simultaneously matched with a mirror port and a mirror flow rule is supported more extensively. For example, a one-way traffic flow between a Virtual Machine VM1 to a Virtual Machine VM2 is specified to be mirrored, and the Virtual Machine VM1 is connected to the port 1 of the mirror source switch. The controller calculates a path between the mirror source switch and the destination switch according to the topology. A flow table is sent to the mirror source switch to match a flow table where an input port is 1, a source MAC of the traffic flow is the device VM1 and a destination MAC of the traffic flow is the device VM2, and an action is forwarding the traffic flow at the output port 1, and simultaneously encapsulating a layer of headers with a VLAN label 10 to a port 3 for mirror forwarding. The intermediate switch and the destination switch perform forwarding to the specified port of the mirror destination switch according to the VLAN label 10. The above are as shown in Table 3 (VLAN-encapsulation-based flow table of remote flow mirroring).

**Table 3**

| Device | Flow table matching field | Action |
|---|---|---|
| Mirror source switch | inport=1 | output port=2 (normal data is forwarded to port 2); |
| | src_mac=mac1, dst_mac=mac2 | push vlan, set vlan-id=10, output port=3 (mirrored flow is forwarded to port 3) |
| Intermediate switch Mirror destination switch | Vland_id=10 | output port=2 (mirrored flow is forwarded to port 2) |
| | src_mac=mac1, dst_mac=mac2 | |

Similarly, VXLAN, GRE, MPLS and other encapsulation may also be adopted for remote flow mirroring. In such case, the flow table of mirror source switch and the flow table of the intermediate switch and the mirror destination switch, which are all sent by the controller, are as shown in Table 4 (VXLAN-encapsulation-based flow table of remote flow mirroring).

**Table 4**

| Device | Flow table matching field | Action |
|---|---|---|
| Mirror source switch | inport=1 | output port=2 (normal data is forwarded to port 2); |
| | src_mac=mac1, dst_mac=mac2 | set tunnelid=100, output port=3 (mirrored flow is forwarded to port 3) |
| Intermediate switch | Tunnel_id=100 | output port=2 (mirrored |
| Mirror destination switch | src_mac=mac1, dst_mac=mac2 | flow is forwarded to port 2) |

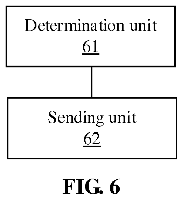

Correspondingly, as shown in FIG. 6, an embodiment of the present disclosure further provides a device for SDN-based control over remote flow mirroring, which includes a determination unit 61 and a sending unit 62.

The determination unit 61 is configured to determine a mirror path between a mirror source switch and a mirror destination switch according to configuration information of remote flow mirroring and network topology information.

The sending unit 62 is configured to send a mirror flow table to switches in the mirror path such that each of the switches mirrors a monitored target traffic flow from the mirror source switch to the mirror destination switch according to the mirror flow table, the mirror flow table carries matching field information specified for the target traffic flow and forwarding action information corresponding to each of the switches.

According to the device for SDN-based control over remote flow mirroring provided in the embodiment of the disclosure, a mirror path between a mirror source switch and a mirror destination switch may be determined according to configuration information of remote flow mirroring and the network topology information, and the mirror flow table is sent to switches in the mirror path. Since the mirror flow table carries matching field information specified for a target traffic flow and forwarding action information corresponding to each of the switches, therefore each of the switches may mirror a monitored target traffic flow from the mirror source switch to the mirror destination switch according to the mirror flow table. In such a manner, it is not needed for a user to set a command on a switch for remote flow mirroring, the controller is adopted for unified management, and then any traffic flow in an SDN may be flexibly mirrored to any destination port in the SDN, thereby greatly simplifying configurations for remote flow mirroring, reducing complexity in network deployment, and increasing a network resource utilization rate effectively.

In an embodiment, the matching field information includes first matching field information for the mirror source switch and second matching field information for one or more intermediate switches and the mirror destination switch. The first matching field information includes mirror port information and/or mirror flow rule information. The second matching field information includes mirror encapsulation label information corresponding to the target traffic flow or a combination of the mirror encapsulation label information and the mirror flow rule.

In an embodiment, the mirror port includes an input port or output port for the target traffic flow on a switch corresponding to the target traffic flow. The mirror flow rule include at least one of: source/destination MAC, a source/destination IP, a source/destination TCP/UDP port, a tunnel label or user-defined metadata.

In an embodiment, the sending unit 62 is configured to send a local mirror flow table to the mirror source switch in the mirror path and send a forwarding mirror flow table to each of the intermediate switch and the mirror destination switch in the mirror path.

In an embodiment, the sending unit 62 is configured to divide the mirror flow table into multiple parts, and send the parts one by one to each of the switches in the mirror path.

It is to be noted that, during practical application, the determination unit 61 may be implemented by a processor in the device for SDN-based control over remote flow mirroring, and the sending unit 62 may be implemented by a communication interface in the device for SDN-based control over remote flow mirroring.

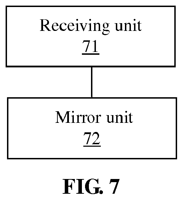

Correspondingly, as shown in FIG. 7, an embodiment of the disclosure further provides a device for SDN-based implementation over remote flow mirroring, which includes a receiving unit 71 and a mirror unit 72.

The receiving unit 71 is configured to receive a mirror flow table from a controller, the mirror flow table carries matching field information specified for a monitored target traffic flow and forwarding action information corresponding to each switch.

The mirror unit 72 is configured to mirror the target traffic flow from a mirror source switch to a mirror destination switch according to the mirror flow table received by the receiving unit.

According to the device for SDN-based implementation over remote flow mirroring provided in the embodiment of the present disclosure, a switch may receive a mirror flow table from a controller and then mirror a target traffic flow from a mirror source switch to a mirror destination switch according to matching field information specified for a monitored target traffic flow and forwarding action information corresponding to each switch in the mirror flow table. In such a manner, it is not needed for a user to set a command on a switch for remote flow mirroring, the controller is adopted for unified management, and then any traffic in an SDN may be flexibly mirrored to any destination port in the SDN, thereby greatly simplifying configurations for remote flow mirroring, reducing complexity in network deployment, and increasing a network resource utilization rate effectively.

In an embodiment, the mirror unit 72 may include an identification module and a forwarding module.

The identification module is configured to identify the target traffic flow from a message sequence according to the matching field information in the mirror flow table.

The forwarding module is configured to perform a corresponding forwarding operation on the target traffic flow according to the forwarding action information in the mirror flow table.

In an embodiment, the mirror unit 72 on the mirror source switch may be configured to screen the target traffic flow from the message sequence according to the matching field information in the mirror flow table.

The mirror unit 72 on the mirror source switch may be configured to label the target traffic flow with a label of mirror encapsulation to form a mirrored flow at the same time of traffic forwarding.

The mirror unit 72 on the mirror source switch may be configured to duplicate the mirrored flow to a port connected with a next-hop switch in the mirror path for output.

In an embodiment, the mirror unit 72 on each intermediate switch in the mirror path corresponding to the target traffic flow may be configured to receive the mirrored flow forwarded by a previous-hop switch.

The mirror unit 72 on each intermediate switch in the mirror path corresponding to the target traffic flow may be configured to identify the mirrored flow from the message sequence according to the matching field information in the mirror flow table and forward the mirrored flow to the next-hop switch until the mirrored flow reaches the mirror destination switch.

The mirror unit 72 on the mirror destination switch may be configured to output the mirrored flow to a port connected with a monitoring device according to the mirror flow table.

In an embodiment, the matching field information includes first matching field information for the mirror source switch and second matching field information for one or more intermediate switches and the mirror destination switch. The first matching field information includes mirror port information and/or mirror flow rule information. The second matching field information includes mirror encapsulation label information corresponding to the target traffic flow or a combination of the mirror encapsulation label information and the mirror flow rule.

During practical application, the receiving unit 71 may be implemented by a communication interface in the device for SDN-based implementation over remote flow mirroring, the mirror unit 72 and the forwarding module may be implemented by a processor in the device for SDN-based implementation over remote flow mirroring in combination with the communication interface, and the identification module may be implemented by the processor in the device for SDN-based implementation over remote flow mirroring.

According to another aspect, an embodiment of the resent disclosure further provides a controller, which includes any device for SDN-based control over remote flow mirroring provided in the abovementioned embodiment. Therefore, corresponding technical effects may also be achieved. Descriptions have been made above and elaborations will be omitted herein.

Correspondingly, an embodiment of the present disclosure further provides a switch, which includes any device for SDN-based implementation over remote flow mirroring provided in the abovementioned embodiment. Therefore, corresponding technical effects may also be achieved. Descriptions have been made above and will not be elaborated herein.

Correspondingly, an embodiment of the disclosure also provides an SDN-based system for remote flow mirroring, which includes any controller and any switch provided in the abovementioned embodiments. Therefore, corresponding technical effects may also be achieved. Descriptions have been made above and will not be elaborated herein.

It is to be noted that terms "include" and "contain" in the disclosure or any other variant thereof is intended to cover nonexclusive inclusions, so that a process, method, object or device including a series of elements not only includes those elements but also includes other elements which are not clearly listed or further includes elements intrinsic to the process, the method, the object or the device. Under the condition of no more limitations, an element defined by the statement "including a/an......" does not exclude existence of the same other elements in a process, method, object or device including the element.

From the above descriptions about the implementation modes, those skilled in the art may clearly know that the method of the abovementioned embodiments may be implemented in a manner of combining software and a necessary universal hardware platform, and of course, may also be implemented through hardware, but the former is a preferred implementation mode under many circumstances. Based on such an understanding, the technical solutions of the disclosure substantially or parts making contributions to the conventional art may be embodied in form of software product, and the computer software product is stored in a storage medium (for example, a Read-Only Memory (ROM)/Random Access Memory (RAM), a magnetic disk and an optical disk), including multiple instructions configured to enable a computer device (which may be a personal computer, a server, an air conditioner, a network device or the like) to execute the method in each embodiment of the disclosure.

That is, an embodiment of the disclosure further provides a storage medium, specifically a computer-readable storage medium, in which a computer program is stored, the computer program being executed by a processor to implement the steps of the method for SDN-based control over remote flow mirroring of the embodiment of the disclosure or implement the steps of the method for SDN-based implementation over remote flow mirroring of the embodiment of the disclosure.

### INDUSTRIAL APPLICABILITY

According to the solutions provided in the embodiments of the disclosure, it is not needed for the user to set the command on the switch for remote flow mirroring, the controller is adopted for unified management, and then any traffic flow in the SDN may be flexibly mirrored to any destination port in the SDN, thereby greatly simplifying the configurations for remote flow mirroring, reducing complexity in network deployment, and increasing the network resource utilization rate effectively.

## Claims

1. A method for software defined network, SDN-based control over remote flow mirroring, comprising:
determining (S11) a mirror path between a mirror source switch and a mirror destination switch according to configuration information of remote flow mirroring and network topology information; and
sending (S12) a mirror flow table to switches in the mirror path, wherein the mirror flow table carries matching field information specified for target traffic flow and forwarding action information corresponding to each of the switches, wherein the matching field information and forwarding action information are used for each of the switches mirroring a monitored target traffic flow from the mirror source switch to the mirror destination switch according to the mirror flow table.

2. The method of claim 1, wherein the configuration information of remote flow mirroring comprises at least one of a mirror port or a mirror flow rule.

3. The method of claim 1, wherein the matching field information comprises first matching field information for the mirror source switch and second matching field information for one or more intermediate switches and the mirror destination switch, the first matching field information comprises at least one of mirror port information or mirror flow rule information, and the second matching field information comprises mirror encapsulation label information corresponding to the target traffic flow or a combination of the mirror encapsulation label information and the mirror flow rule.

4. The method of claim 2 or 3, wherein
the mirror port comprises an input port or output port for the target traffic flow on a switch corresponding to the target traffic flow; and
the mirror flow rule comprises at least one of: source/destination Media Access Control, MAC, a source/destination Internet Protocol, IP, a source/destination Transmission Control Protocol, TCP/User Datagram Protocol, UDP port, a tunnel label or user-defined metadata.

5. The method of claim 1, wherein the sending a mirror flow table to switches in the mirror path comprises:
sending a local mirror flow table to the mirror source switch in the mirror path; and
sending a forwarding mirror flow table to each intermediate switch and the mirror destination switch in the mirror path.

6. The method of claim 1, wherein the sending a mirror flow table to switches in the mirror path comprises:
dividing the mirror flow table into a plurality of parts, and sending the parts one by one to each of the switches in the mirror path.

7. A method for software defined network, SDN-based implementation over remote flow mirroring, executed by switches and comprising:
receiving (S21) a mirror flow table from a controller, wherein the mirror flow table carries matching field information specified for a monitored target traffic flow and forwarding action information corresponding to each switch, wherein the matching field information and forwarding action information are used for each of the switches mirroring a monitored target traffic flow from the mirror source switch to the mirror destination switch according to the mirror flow table; and
mirroring (S22) the target traffic flow from a mirror source switch to a mirror destination switch according to the mirror flow table.

8. The method of claim 7, wherein mirroring the target traffic flow from a mirror source switch to a mirror destination switch according to the mirror flow table comprises:
identifying the target traffic flow from a message sequence according to the matching field information in the mirror flow table; and
performing a corresponding forwarding operation on the target traffic flow according to the forwarding action information in the mirror flow table.

9. The method of claim 7, wherein steps performed by the mirror source switch comprises:
screening the target traffic flow from a message sequence according to the matching field information in the mirror flow table;
labeling the target traffic flow with a label of mirror encapsulation to form a mirrored flow at a same time of traffic forwarding; and
duplicating the mirrored flow to a port connected with a next-hop switch in the mirror path for output.

10. The method of claim 9, wherein
steps performed by each intermediate switch in the mirror path corresponding to the target traffic flow comprises:
receiving the mirrored flow forwarded by a previous-hop switch,
identifying the mirrored flow from the message sequence according to the matching field information in the mirror flow table and forwarding the mirrored flow to the next-hop switch until the mirrored flow reaches the mirror destination switch; and
steps performed by the mirror destination switch comprises:
outputting the mirrored flow to a port connected with a monitoring device according to the mirror flow table.

11. The method of any one of claims 7-10, wherein the matching field information comprises first matching field information for the mirror source switch and second matching field information for one or more intermediate switches and the mirror destination switch, the first matching field information comprises at least one of mirror port information or mirror flow rule information, and the second matching field information comprises mirror encapsulation label information corresponding to the target traffic flow or a combination of the mirror encapsulation label information and the mirror flow rule.

12. A device for software defined network, SDN-based control over remote flow mirroring, comprising:
a determination unit (61), configured to determine a mirror path between a mirror source switch and a mirror destination switch according to configuration information of remote flow mirroring and network topology information; and
a sending unit (62), configured to send a mirror flow table to switches in the mirror path, wherein the mirror flow table carries matching field information specified for the target traffic flow and forwarding action information corresponding to each of the switches, wherein the matching field information and forwarding action information are used for each of the switches mirroring a monitored target traffic flow from the mirror source switch to the mirror destination switch according to the mirror flow table.

13. A device for software defined network, SDN-based implementation over remote flow mirroring, applied to switches and comprising:
a receiving unit (71), configured to receive a mirror flow table from a controller, wherein the mirror flow table carries matching field information specified for a monitored target traffic flow and forwarding action information corresponding to each switch, wherein the matching field information and forwarding action information are used for each of the switches mirroring a monitored target traffic flow from the mirror source switch to the mirror destination switch according to the mirror flow table; and
a mirror unit (72), configured to mirror the target traffic flow from a mirror source switch to a mirror destination switch according to the mirror flow table received by the receiving unit.

14. A controller, configured to perform the method for software defined network ,SDN-based control over remote flow mirroring of any one of claims 1-6.

15. A switch, configured to perform the method for software defined network , SDN-based implementation over remote flow mirroring of any one of claims 7-11.

## Patentansprüche

1. Verfahren für auf einem softwaredefinierten Netzwerk, SDN, basierte Steuerung von Remote-Flussspiegelung, umfassend:
Bestimmen (S11) eines Spiegelpfades zwischen einem Spiegelursprungsswitch und einem Spiegelzielswitch gemäß Konfigurationsinformationen von Remote-Flussspiegelung und Netzwerktopologieinformationen; und
Senden (S12) einer Spiegelflusstabelle an Switches auf dem Spiegelpfad, wobei die Spiegelflusstabelle Anpassungsfeldinformationen, die für Zielverkehrsfluss spezifiziert sind, und Weiterleitungsaktionsinformationen führt, die jedem der Switches entsprechen, wobei die Anpassungsfeldinformationen und die Weiterleitungsaktionsinformationen für jeden der Switches verwendet werden, der einen überwachten Verkehrsfluss gemäß der Spiegelflusstabelle vom Spiegelursprungsswitch zum Spiegelzielswitch spiegelt.

2. Verfahren nach Anspruch 1, wobei die Konfigurationsinformationen von Remote-Flussspiegelung mindestens eines von einem Spiegelport und einer Spiegelflussregel umfassen.

3. Verfahren nach Anspruch 1, wobei die Anpassungsfeldinformationen erste Anpassungsfeldinformationen für den Spiegelursprungsswitch und zweite Anpassungsfeldinformationen für einen oder mehrere Zwischenswitches und den Spiegelzielswitch umfassen, wobei die ersten Anpassungsfeldinformationen mindestens eine von Spiegelportinformationen oder Spiegelflussregelinformationen umfassen, und die zweiten Anpassungsfeldinformationen Spiegelverkapselungsetikettinformationen, die dem Zielverkehrsfluss entsprechen. oder eine Kombination der Spiegelverkapselungsetikettinformationen und der Spiegelflussregel umfassen.

4. Verfahren nach Anspruch 2 oder 3, wobei
ein Spiegelport einen Eingangsport oder einen Ausgangsport für den Zielverkehrsfluss auf einem Switch umfasst, der dem Zielverkehrsfluss entspricht; und
die Spiegelflussregel mindestens eines umfasst von: Ursprungs-/Ziel-Medienzugriffssteuerung, MAC, einem Ursprungs-/Ziel-Internetprotokoll, IP, einem Ursprungs-/Ziel-Übertragungssteuerungsprotokoll-,TCP-,/Benutzer-Datagrammprotokoll-,UDP-,Port, einem Tunnel-Etikett oder benutzerdefinierten Metadaten.

5. Verfahren nach Anspruch 1, wobei das Senden einer Spiegelflusstabelle an Switches auf dem Spiegelweg umfasst:
Senden einer lokalen Spiegelflusstabelle an den Spiegelursprungsswitch auf dem Spiegelpfad und
Senden einer Weiterleitungs-Spiegelflusstabelle an jeden Zwischenswitch und den Spiegelzielswitch auf dem Spiegelpfad.

6. Verfahren nach Anspruch 1, wobei das Senden einer Spiegelflusstabelle an Switches auf dem Spiegelweg umfasst:
Teilen der Spiegelflusstabelle in eine Mehrzahl von Teilen und Senden der Teile einen nach dem anderen an jeden der Switches auf dem Spiegelpfad.

7. Verfahren für auf einem softwaredefinierten Netzwerk, SDN, basierte Implementierung von Remote-Flussspiegelung, das von Switches ausgeführt wird und umfasst:
Empfangen (S21) einer Spiegelflusstabelle von einem Controller, wobei die Spiegelflusstabelle Anpassungsfeldinformationen, die für einen überwachten Zielverkehrsfluss spezifiziert sind, und Weiterleitungsaktionsinformationen führt, die jedem Switch entsprechen, wobei die Anpassungsfeldinformationen und Weiterleitungsaktionsinformationen für jeden der Switches verwendet werden, der einen überwachten Verkehrsfluss gemäß der Spiegelflusstabelle vom Spiegelursprungsswitch zum Spiegelzielswitch spiegelt; und
Überwachen (S22) des Zielverkehrsflusses von einem Spiegelursprungsswitch zu einem Spiegelzielswitch gemäß der Spiegelflusstabelle.

8. Verfahren nach Anspruch 7, wobei ein Spiegeln des Zielverkehrsflusses von einem Spiegelursprungsswitch zu einem Spiegelzielswitch gemäß der Spiegelflusstabelle umfasst:
Identifizieren des Zielverkehrsflusses aus einer Nachrichtenfolge gemäß den Anpassungsfeldinformationen in der Spiegelflusstabelle; und
Durchführen eines entsprechenden Weiterleitungsvorgangs am Zielverkehrsfluss gemäß den Weiterleitungsaktionsinformationen in der Spiegelflusstabelle.

9. Verfahren nach Anspruch 7, wobei Schritte, die vom Spiegelursprungsswitch ausgeführt werden, umfassen:
Screenen des Zielverkehrsflusses aus einer Nachrichtenfolge gemäß den Anpassungsfeldinformationen in der Spiegelflusstabelle;
Etikettieren des Zielverkehrsflusses mit einem Spiegelverkapselungsetikett zum Bilden eines gespiegelten Flusses gleichzeitig mit Verkehrsweiterleitung; und
Duplizieren des gespiegelten Flusses für einen Port, der mit einem Switch eines nächsten Hops auf dem Spiegelpfad verbunden ist, zur Ausgabe.

10. Verfahren nach Anspruch 9, wobei
Schritte, die von jedem Zwischenswitch auf dem Spiegelpfad ausgeführt werden, die dem Zielverkehrsfluss entsprechen, umfassen:
Empfangen des gespiegelten Flusses, der von einem Switch eines vorhergehenden Hops weitergeleitet wird,
Identifizieren des gespiegelten Flusses aus der Nachrichtenfolge gemäß den Anpassungsfeldinformationen in der Spiegelflusstabelle und Weiterleiten des gespiegelten Fluss zum Switch des nächstens Hops, bis der gespiegelte Fluss den Spiegelzielswitch erreicht; und
Schritte, die vom Spiegelzielswitch ausgeführt werden, umfassen:
Ausgeben des gespiegelten Flusses an einen Port, der mit einer Überwachungsvorrichtung verbunden ist, gemäß der Spiegelflusstabelle.

11. Verfahren nach einem der Ansprüche 7 bis 10, wobei die Anpassungsfeldinformationen erste Anpassungsfeldinformationen für den Spiegelursprungsswitch und zweite Anpassungsfeldinformationen für einen oder mehrere Zwischenswitches und den Spiegelzielswitch umfassen, wobei die ersten Anpassungsfeldinformationen mindestens eine von Spiegelportinformationen oder Spiegelflussregelinformationen umfassen, und die zweiten Anpassungsfeldinformationen Spiegelverkapselungsetikettinformationen, die dem Zielverkehrsfluss entsprechen. oder eine Kombination der Spiegelverkapselungsetikettinformationen und der Spiegelflussregel umfassen.

12. Vorrichtung für auf einem softwaredefinierten Netzwerk, SDN, basierte Steuerung von Remote-Flussspiegelung, umfassend:
eine Bestimmungseinheit (61), die zum Bestimmen eines Spiegelpfades zwischen einem Spiegelursprungsswitch und einem Spiegelzielswitch gemäß Konfigurationsinformationen von Remote-Flussspiegelung und Netzwerktopologieinformationen konfiguriert ist; und
eine Sendeeinheit (62), die zum Senden einer Spiegelflusstabelle an Switches auf dem Spiegelpfad konfiguriert ist, wobei die Spiegelflusstabelle Anpassungsfeldinformationen, die für den Zielverkehrsfluss spezifiziert sind, und Weiterleitungsaktionsinformationen führt, die jedem der Switches entsprechen, wobei die Anpassungsfeldinformationen und Weiterleitungsaktionsinformationen für jeden der Switches verwendet werden, der einen überwachten Verkehrsfluss gemäß der Spiegelflusstabelle vom Spiegelursprungsswitch zum Spiegelzielswitch spiegelt.

13. Vorrichtung für auf einem softwaredefinierten Netzwerk, SDN, basierte Implementierung von Remote-Flussspiegelung, die auf Switches angewendet wird und umfasst:
eine Empfangseinheit (71), die zum Empfangen einer Spiegelflusstabelle von einem Controller konfiguriert ist, wobei die Spiegelflusstabelle Anpassungsfeldinformationen, die für einen überwachten Zielverkehrsfluss spezifiziert sind, und Weiterleitungsaktionsinformationen führt, die jedem Switch entsprechen, wobei die Anpassungsfeldinformationen und Weiterleitungsaktionsinformationen für jeden der Switches verwendet werden, der einen überwachten Verkehrsfluss gemäß der Spiegelflusstabelle vom Spiegelursprungsswitch zum Spiegelzielswitch spiegelt; und
eine Spiegeleinheit (72), die zum Spiegeln des Zielverkehrsflusses von einem Spiegelursprungsswitch zu einem Spiegelzielswitch gemäß der durch die Empfangseinheit empfangenen Spiegelflusstabelle konfiguriert ist.

14. Controller, der zum Durchführen des Verfahrens für auf einem softwaredefinierten Netzwerk, SDN, basierte Steuerung von Remote-Flussspiegelung nach einem der Ansprüche 1 bis 6 konfiguriert ist.

15. Switch, der zum Durchführen des Verfahrens für auf einem softwaredefinierten Netzwerk, SDN, basierte Implementierung von Remote-Flussspiegelung nach einem der Ansprüche 7 bis 11 konfiguriert ist.

## Revendications

1. Procédé de commande à base de réseau défini par logiciel, SDN, sur une mise en miroir de flux à distance, comprenant les étapes ci-dessous consistant à :
déterminer (S11) un chemin miroir entre un commutateur de source miroir et un commutateur de destination miroir selon des informations de configuration de mise en miroir de flux à distance et des informations de topologie de réseau ; et
envoyer (S12) une table de flux miroir à des commutateurs sur le chemin miroir, dans lequel la table de flux miroir transporte des informations de champs de correspondance spécifiées pour un flux de trafic cible, et des informations d'action d'acheminement correspondant à chacun des commutateurs, dans lequel les informations de champs de correspondance et les informations d'action d'acheminement sont utilisées pour chacun des commutateurs mettant en miroir un flux de trafic cible surveillé, du commutateur de source miroir au commutateur de destination miroir, selon la table de flux miroir.

2. Procédé selon la revendication 1, dans lequel les informations de configuration de mise en miroir de flux à distance comprennent au moins l'un des éléments parmi un port miroir ou une règle de flux miroir.

3. Procédé selon la revendication 1, dans lequel les informations de champs de correspondance comprennent des premières informations de champs de correspondance pour le commutateur de source miroir et des secondes informations de champs de correspondance pour un ou plusieurs commutateurs intermédiaires et le commutateur de destination miroir, les premières informations de champs de correspondance comprennent au moins l'une parmi des informations de port miroir ou des informations de règle de flux miroir, et les secondes informations de champs de correspondance comprennent des informations d'étiquette d'encapsulation miroir correspondant au flux de trafic cible, ou une combinaison des informations d'étiquette d'encapsulation miroir et de la règle de flux miroir.

4. Procédé selon la revendication 2 ou 3, dans lequel :
le port miroir comprend un port d'entrée ou un port de sortie pour le flux de trafic cible sur un commutateur correspondant au flux de trafic cible ; et
la règle de flux miroir comprend au moins l'un des éléments ci-après : une commande d'accès au support, MAC, de source/destination, un protocole Internet, IP, de source/destination, un port de protocole de commande de transmission/protocole de datagramme utilisateur, TCP/UDP, de source/destination, une étiquette de tunnel ou des métadonnées définies par l'utilisateur.

5. Procédé selon la revendication 1, dans lequel l'étape d'envoi d'une table de flux miroir à des commutateurs sur le chemin miroir comprend les étapes ci-dessous consistant à :
envoyer une table de flux miroir locale au commutateur de source miroir sur le chemin miroir ; et
envoyer une table de flux miroir d'acheminement à chaque commutateur intermédiaire et au commutateur de destination miroir sur le chemin miroir.

6. Procédé selon la revendication 1, dans lequel l'étape d'envoi d'une table de flux miroir à des commutateurs sur le chemin miroir comprend l'étape ci-dessous consistant à :
diviser la table de flux miroir en plusieurs parties, et envoyer les parties, une par une, à chacun des commutateurs sur le chemin miroir.

7. Procédé de mise en œuvre à base de réseau défini par logiciel, SDN, sur une mise en miroir de flux à distance exécuté par des commutateurs, et comprenant les étapes ci-dessous consistant à :
recevoir (S21) une table de flux miroir en provenance d'un contrôleur, dans lequel la table de flux miroir transporte des informations de champs de correspondance spécifiées pour un flux de trafic cible surveillé, et des informations d'action d'acheminement correspondant à chaque commutateur, dans lequel les informations de champs de correspondance et les informations d'action d'acheminement sont utilisées pour chacun des commutateurs mettant en miroir un flux de trafic cible surveillé, du commutateur de source miroir au commutateur de destination miroir, selon la table de flux miroir ;
mettre en miroir (S22) le flux de trafic cible, d'un commutateur de source miroir à un commutateur de destination miroir, selon la table de flux miroir.

8. Procédé selon la revendication 7, dans lequel l'étape de mise en miroir du flux de trafic cible, d'un commutateur de source miroir à un commutateur de destination miroir, selon la table de flux miroir, comprend les étapes ci-dessous consistant à :
identifier le flux de trafic cible à partir d'une séquence de messages selon les informations de champs de correspondance dans la table de flux miroir ; et
mettre en œuvre une opération d'acheminement correspondante sur le flux de trafic cible, selon les informations d'action d'acheminement dans la table de flux miroir.

9. Procédé selon la revendication 7, dans lequel les étapes mises en œuvre par le commutateur de source miroir comprennent les étapes ci-dessous consistant à :
filtrer le flux de trafic cible à partir d'une séquence de messages selon les informations de champs de correspondance dans la table de flux miroir ;
étiqueter le flux de trafic cible avec une étiquette d'encapsulation miroir pour former un flux mis en miroir simultanément à l'acheminement de trafic ; et
dupliquer le flux mis en miroir sur un port connecté à un commutateur de saut successif sur le chemin miroir à des fins de fourniture en sortie.

10. Procédé selon la revendication 9, dans lequel
les étapes mises en œuvre par chaque commutateur intermédiaire sur le chemin miroir correspondant au flux de trafic cible comprennent les étapes ci-dessous consistant à :
recevoir le flux mis en miroir acheminé par un commutateur de saut précédent ;
identifier le flux mis en miroir en provenance de la séquence de messages selon les informations de champs de correspondance dans la table de flux miroir et acheminer le flux mis en miroir au commutateur de saut successif jusqu'à ce que le flux mis en miroir atteigne le commutateur de destination miroir ; et
les étapes mises en œuvre par le commutateur de destination miroir comprennent l'étape ci-dessous consistant à :
fournir en sortie le flux mis en miroir vers un port connecté à un dispositif de surveillance, selon la table de flux miroir.

11. Procédé selon l'une quelconque des revendications 7 à 10, dans lequel les informations de champs de correspondance comprennent des premières informations de champs de correspondance pour le commutateur de source miroir, et des secondes informations de champs de correspondance pour un ou plusieurs commutateurs intermédiaires et le commutateur de destination miroir, les premières informations de champs de correspondance comprennent au moins l'une parmi des informations de port miroir ou des informations de règle de flux miroir, et les secondes informations de champs de correspondance comprennent des informations d'étiquette d'encapsulation miroir correspondant au flux de trafic cible, ou une combinaison des informations d'étiquette d'encapsulation miroir et de la règle de flux miroir.

12. Dispositif de commande à base de réseau défini par logiciel, SDN, sur une mise en miroir de flux à distance, comprenant :
une unité de détermination (61), configurée de manière à déterminer un chemin miroir entre un commutateur de source miroir et un commutateur de destination miroir selon des informations de configuration de mise en miroir de flux à distance et des informations de topologie de réseau ; et
une unité d'envoi (62), configurée de manière à envoyer une table de flux miroir à des commutateurs sur le chemin miroir, dans lequel la table de flux miroir transporte des informations de champs de correspondance spécifiées pour le flux de trafic cible et des informations d'action d'acheminement correspondant à chacun des commutateurs, dans lequel les informations de champs de correspondance et les informations d'action d'acheminement sont utilisées pour chacun des commutateurs mettant en miroir un flux de trafic cible surveillé, du commutateur de source miroir au commutateur de destination miroir, selon la table de flux miroir.

13. Dispositif de mise en œuvre à base de réseau défini par logiciel, SDN, sur une mise en miroir de flux à distance, appliqué à des commutateurs, et comprenant :
une unité de réception (71), configurée de manière à recevoir une table de flux miroir en provenance d'un contrôleur, dans lequel la table de flux miroir transporte des informations de champs de correspondance spécifiées pour un flux de trafic cible surveillé, et des informations d'action d'acheminement correspondant à chaque commutateur, dans lequel les informations de champs de correspondance et les informations d'action d'acheminement sont utilisées pour chacun des commutateurs mettant en miroir un flux de trafic cible surveillé, du commutateur de source miroir au commutateur de destination miroir, selon la table de flux miroir ; et
une unité miroir (72), configurée de manière à mettre en miroir le flux de trafic cible, d'un commutateur de source miroir à un commutateur de destination miroir, selon la table de flux miroir reçue par l'unité de réception.

14. Contrôleur, configuré de manière à mettre en œuvre le procédé de commande à base de réseau défini par logiciel, SDN, sur une mise en miroir de flux à distance selon l'une quelconque des revendications 1 à 6.

15. Commutateur, configuré de manière à mettre en œuvre le procédé de mise en œuvre à base de réseau défini par logiciel, SDN, sur une mise en miroir de flux à distance selon l'une quelconque des revendications 7 à 11.
